# EUROPEAN PATENT SPECIFICATION

(11) **EP 3 450 254 B1**
(45) Date of publication and mention of the grant of the patent: **20.07.2022**
(21) Application number: 18191775.8
(22) Date of filing: 30.08.2018
(51) Int. Cl.: B60Q 1/56, B60Q 1/00, B62J 15/02, B62J 6/04, F21S 45/10, F21S 43/19, F21W 107/17, F21W 103/50

(54) **LICENSE PLATE LIGHT ATTACHING STRUCTURE**
BEFESTIGUNGSSTRUKTUR EINER NUMMERNSCHILDLEUCHTE
STRUCTURE DE FIXATION LUMINEUSE DE PLAQUE D'IMMATRICULATION

(30) Priority: 31.08.2017 JP 2017167739
(43) Date of publication of application: 06.03.2019
(73) Proprietor: HONDA MOTOR CO., LTD., Tokyo 107-8556 (JP)
(72) Inventor: MOGI, Akira, Saitama, 351-0193 (JP); MAEDA, Rui, Saitama, 351-0193 (JP); SATO, Atsuki, Saitama, 351-0193 (JP)
(74) Representative: Weickmann & Weickmann PartmbB

(56) References cited:
- EP-A1- 2 289 738
- EP-A2- 0 974 511
- GB-A- 652 089
- JP-A- 2004 074 915
- JP-A- 2006 244 760
- JP-B2- 5 301 295
- JP-U- S5 854 342
- JP-U- S59 193 785

## Description

### BACKGROUND OF THE INVENTION

### Field of the Invention:

The present invention relates to a license plate light attaching structure with a license plate light attached on a rear fender of a motorcycle.

### Description of the Related Art:

Motorcycles have rear fenders covering upper part of rear wheels. A license plate and a license plate light are attached to the rear fender. The light emitted from the license plate light illuminates the license plate.

As described in Japanese Laid-Open Patent Publication No. 2013-244883, a license plate light is attached to a rear fender through a support member. Motorcycles during traveling vibrate while passing gaps on a road surface and the like. In order to avoid a license plate light from falling due to such vibrations, an elastic body such as rubber or the like is used as a support member, as described in Japanese Laid-Open Patent Publication No. 2014-061867. This is because vibrations are absorbed by the elastic body, and thus because the vibrations transmitted to the license plate light are attenuated (reduced).

JP 5301295 B2 shows a license plate light attachment structure according to the preamble of claim 1.

EP 0 974 511 A2 shows a light bulb elastically supported on a license plate light holder.

In JP 2004 074915 A, the housing of the license plate light is mounted to a body cover stay via rubber bushing by a vertically extending bolt. Additionally, the housing is mounted to a body cover stay via rubber bushings by two horizontally extending bolts on both lateral sides of the light bulb. Thus, the horizontally extending bolt and the corresponding bushing do not mount the light holder to the housing, but instead, the housing to the body cover stay.

### SUMMARY OF THE INVENTION

In motorcycles, vibrations are liable to be generated as the displacement of an internal combustion engine increases and as the number of cylinders decreases. Even in the motorcycles in which vibrations are relatively liable to be generated, it has been necessary to improve the attaching strength of a license plate light in order to prevent problems resulting from the vibrations transmitted to the license plate light. Here, the problems resulting from the vibrations means disconnection of a light source, loosening of or damage on the attaching portion, and the like. Accordingly, there has been a demand for a further attenuation (reduction) of the vibrations transmitted to the license plate light.

A main object of the present invention is to provide a license plate light attaching structure capable of restraining, as much as possible, vibrations from being transmitted to a light main body constituting a license plate light.

According to claim 1, the license plate light attaching structure with a license plate light attached to a rear fender of a motorcycle, includes: the license plate light has a light main body including a light source, a light holder provided with the light main body, and a housing holding the light holder; the housing is floatingly supported on the rear fender through a first elastic body and fixedly positioned on the rear fender by a first screw member passing through the first elastic body, wherein the axis of the first screw member extends in a front-rear direction of a vehicle body of the motorcycle, when the licence plate light is attached to the vehicle body; and the light holder is floatingly supported on the housing through a second elastic body, wherein the light holder is fixedly positioned on the housing by a second screw member passing through the second elastic body; and an axis of the second screw member extends in an upward-downward direction of the vehicle body of the motorcycle, when the licence plate light is attached to the vehicle body.

Because the housing is floatingly supported on the rear fender through the first elastic body, vibrations become hard to be transmitted from the rear fender to the license plate light. This is because the first elastic body absorbs the vibrations. The second elastic body interposed between the light holder and the housing and floatingly supporting the light holder likewise absorbs vibrations. Thus, vibrations become hard to be transmitted from the housing to the light holder and therefore to the light main body.

As described above, according to the present invention, vibrations are restrained from being transmitted to the light main body constituting the license plate light. For this reason, it is possible to prevent problems from occurring in the license plate light and the light main body due to vibrations transmitted from the rear fender. Particularly, the present invention is useful for motorcycles that make large vibrations such as motorcycles having large engine displacement, a small number of cylinders, and the like.

In this case, the vibrations transmission direction of the first screw member differs from the vibrations transmission direction of the second screw member. Accordingly, it becomes more difficult for the vibrations to be transmitted from the first elastic body through which the first screw member passes, to the second elastic body through which the second screw member passes. That is, it becomes more suitable because vibrations are not transmitted to the light main body easily.

In order to floatingly support the light holder on the housing, for example, a through hole may be formed in the light holder, and the second elastic body may be held by the through hole. Accordingly, it is possible to floatingly support the light holder in a simplified configuration.

The rear fender may be attached to a swing arm through a stay. In this case, vibrations are easily transmitted to the rear fender in comparison with the conventional motorcycles in which a rear fender is provided at a rearward portion of a vehicle body frame. However, according to the present invention in which floating support structures are provided at two places as described above, vibrations are restrained from being transmitted from the rear fender to the housing of the license plate light and further, to the light main body. This is because even in the rear fender attached to the swing arm, it is possible to avoid problems from being caused by the vibrations transmitted to the license plate light.

Further, in this case, it is possible to provide a motorcycle excellent in aesthetic.

According to the present invention, the housing constituting the license plate light is floatingly supported on the rear fender through the first elastic body, and the light holder constituting the license plate light and provided with the light main body is floatingly supported on the housing through the second elastic body. That is, floating support structures are provided at two places.

With this configuration, vibrations are absorbed by the first elastic body interposed between the rear fender and the housing and by the second elastic body interposed between the housing and the light holder. Consequently, vibrations are not easily transmitted to the light holder and the light main body provided on the light holder. That is, because vibrations are restrained from being transmitted to the light holder and the light main body, it is possible to lower the strength of the license plate light and the light main body.

The above and other objects, features, and advantages of the present invention will become more apparent from the following description when taken in conjunction with the accompanying drawings, in which a preferred embodiment of the present invention is shown by way of an illustrative example.

### BRIEF DESCRIPTION OF THE DRAWINGS

FIG. 1 is a schematic side view of a motorcycle with a license plate light attached;
FIG. 2 is a schematic perspective view showing a main part of a vehicle body rear portion of the motorcycle shown in FIG. 1;
FIG. 3 is an exploded perspective view showing a main part the vehicle body rear portion of the motorcycle;
FIG. 4 is a schematic exploded perspective view of the license plate light;
FIG. 5 is a schematic perspective view of the license plate light as viewed from below; and
FIG. 6 is a cross-sectional side view of the license plate light taken along a front-rear direction of a vehicle body.

### DESCRIPTION OF THE PREFERRED EMBODIMENTS

Hereinafter, with reference to the accompanying drawings, a license plate light attaching structure according to the present invention will be described in detail based on a preferred embodiment in relation to a motorcycle with a license plate light. Incidentally, words "front", "rear", "left", "right", "up " and "down" used in the following description respectively indicate the frontward, rearward, leftward, rightward, upward and downward directions as viewed from a rider seated on a rider's seat of a motorcycle.

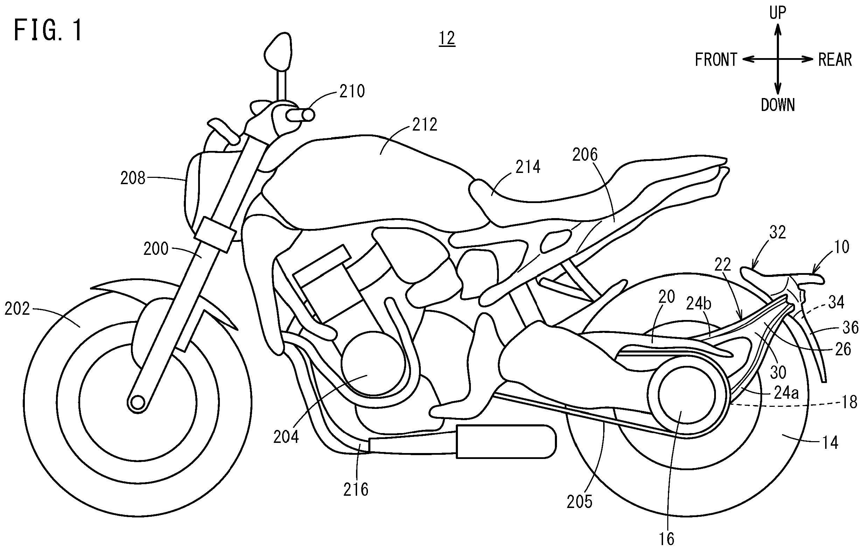

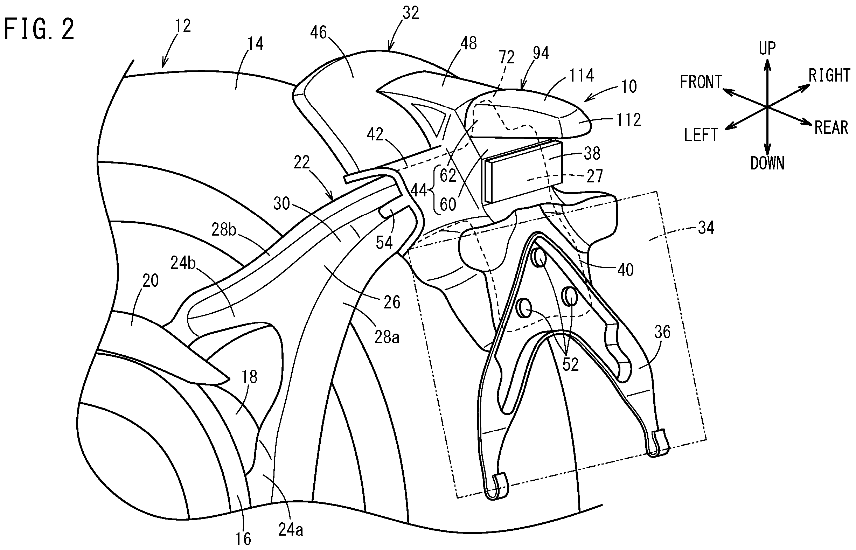

FIGS. 1 and 2 are respectively a schematic side view and a schematic perspective view of the main part of a motorcycle 12 with a license plate light 10 attached. The motorcycle 12 has a font wheel 202 supported by a front fork 200, a rear wheel 14, a chain 205 and a sprocket 16 for transmitting a rotational driving force of an internal combustion engine 204 to the rear wheel 14, and a swing arm 18 supporting the rear wheel 14 on a vehicle body frame 206. The chain 205 is covered and protected by a chain cover 20.

As shown in FIG. 1, the motorcycle 12 further has a headlight 208 and a handle 210 provided on a front fork 200, a fuel tank 212 storing fuel used in driving the internal combustion engine 204, and a seat 214 on which user (a rider and/or a fellow passenger) is to be seated. The internal combustion engine 204 is connected to an exhaust pipe 216 for guiding combustion gas burnt in the internal combustion engine 204.

At a rear side of the vehicle body, there is arranged a stay 22 which is curved to cover a part of the rear wheel 14. A left end portion of the stay 22 located on the left of the vehicle body is bifurcated to take an approximately Y-shape in the side view of the vehicle body. Distal ends of branch portions 24a, 24b formed by the bifurcation are supported by the swing arm 18. Further, a single wide portion 26 which is formed by the merger of two branch portions 24a, 24b is bent to be directed from a rear-upper side of the rear wheel 14 toward the width direction of the vehicle body and is formed with a rear fender attaching portion 27 on an obliquely upper side of the rear wheel 14.

Attaching wall portions 28a, 28b which are directed outward in the width direction of the vehicle body and rearward of the vehicle body rise at outer edge portions of the stay 22. Thus, an engaging groove 30 is formed between the attaching wall portions 28a, 28b facing each other.

A rear fender 32 is attached to a rear fender attaching portion 27 of the stay 22. That is, the rear fender 32 is supported by the swing arm 18 through the stay 22. The rear fender 32 is provided with a plate holder 36 holding a license plate 34, a reflector 38 for reflecting light, and a license plate light 10.

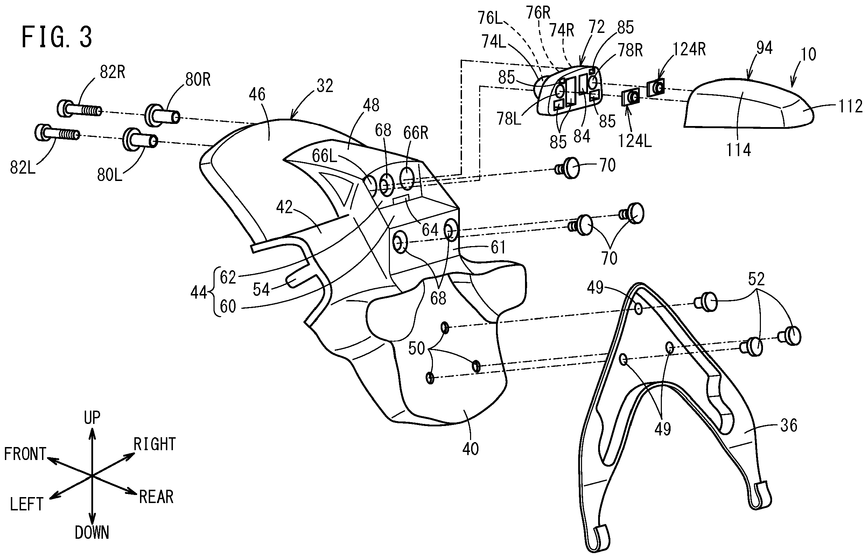

As shown in FIG. 3, the rear fender 32 has a wide flat portion 40 attaching the plate holder 36, a stay receiving portion 42 receiving a wide portion 26, a license plate light receiving portion 44 attaching a license plate light 10, and a guard portion 46 facing a portion of the rear wheel 14. Further, the rear fender 32 also has an arch portion 48 bridging from the guard portion 46 to the license plate light receiving portion 44.

The plate holder 36 formed in an inverted V-shape is attached through the rear fender 32 to the rear fender attaching portion 27 by three attaching bolts 52 which are inserted into bolt passing holes 49 formed in the plate holder 36 and bolt holes 50 formed in the flat portion 40 of the rear fender 32. Further, the stay receiving portion 42 has a protrusion 54 engaged with the engaging groove 30. That is, the rear fender 32 is engaged with the engaging groove 30 at the protrusion 54 of the stay receiving portion 42 and thus positioned on the wide portion 26 of the stay 22 at the vehicle rear portion.

The license plate light receiving portion 44 has a mounting bottom wall 60 and a support wall 62 upstanding from the mounting bottom wall 60 to be slightly inclined toward the vehicle front side. A harness insertion hole 64 is formed at a boundary between the mounting bottom wall 60 and the support wall 62, and a left support hole 66L and a right support hole 66R are formed in the support wall 62.

Further, bolt insertion holes 68 are formed between the left support hole 66L and the right support hole 66R and in a wall portion 61 suspended from the mounting bottom wall 60. These bolt insertion holes 68 enable attaching bolts 70 to pass therethrough for attaching the rear fender 32 to the rear fender attaching portion 27. Incidentally, the reflector 38 is positioned and fixed on the wall portion 61 below the mounting bottom wall 60.

The license plate light 10 is floatingly supported on the license plate light receiving portion 44 through a first rubber mount 72 (first elastic body). This respect will be described in relation to the configuration of the license plate light 10.

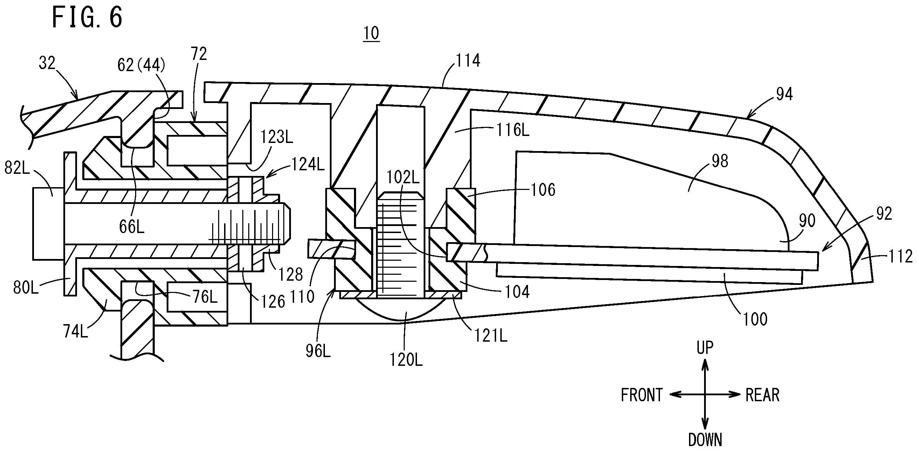

At first, the first rubber mount 72 is a rubber member formed in an approximately quadrangle at a rear surface facing the vehicle rear side. The first rubber mount 72 is suitably formed at its rear surface with a harness passing hole 84, a left collar insertion hole 78L, a right collar insertion hole 78R, lightening portions 85 and is also formed at its front surface facing the vehicle front side with a left annular protrusion 74L and a right annular protrusion 74R which protrude toward the vehicle front side. The left annular protrusion 74L and the right annular protrusion 74R are respectively formed with annular grooves 76L, 76R (refer to FIG. 6 in particular) each depressed radially inward.

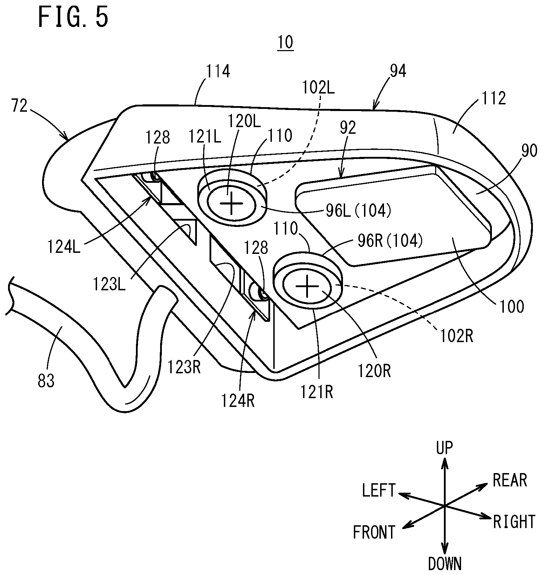

The hollow interior of the left annular protrusion 74L is the left collar insertion hole 78L opening at the rear surface, and likewise, the hollow interior of the right annular protrusion 74R is the right collar insertion hole 78R opening at the rear surface. A left collar 80L and a right collar 80R are respectively inserted into the left collar insertion hole 78L and the right collar insertion hole 78R, and a first left bolt 82L and a first right bolt 82R as first screw members are inserted into the left collar 80L and the right collar 80R, respectively. Furthermore, the harness passing hole 84 through which a harness 83 (refer to FIG. 5) passes is formed between the left collar insertion hole 78L and the right collar insertion hole 78R.

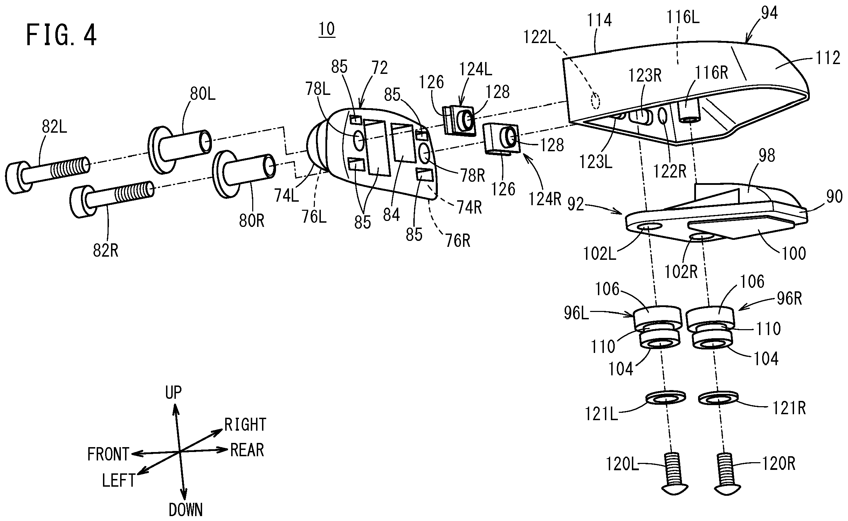

Next, the license plate light 10 will be described with reference to FIG. 4 as an exploded a schematic perspective view, FIG. 5 as a schematic perspective view from below and FIG. 6 as a cross-sectional side view along the vehicle front-rear direction. The license plate light 10 has a light holder 92 provided with a light main body 90, a housing 94 holding the light holder 92, and a second left rubber mount 96L and a second right rubber mount 96R (second elastic bodies) for holding the light holder 92 on the housing 94.

The light holder 92 has a receiving portion 98 (refer to FIGS. 4 and 6) expanding toward the housing 94. A light source for irradiating light is received in the receiving portion 98. A bottom opening of the receiving portion 98 is closed by a translucent lens 100, and the light from the light source passes through the translucent lens 100 to illuminate the license plate 34.

Further, at an end portion on the side close to the first rubber mount 72, the light holder 92 is formed with a left insertion hole 102L and a right insertion hole 102R as through holes. On the other hand, the second left rubber mount 96L and the second right rubber mount 96R are rubber cylindrical members each having a small-diameter portion 104 and a large-diameter portion 106 and each also have an annular recess 110 formed between the small-diameter portion 104 and the large-diameter portion 106. The second left rubber mount 96L and the second right rubber mount 96R are pushed into the left insertion hole 102L and the right insertion hole 102R by a position where the respective annular recesses 110 are fitted with the left insertion hole 102L and the right insertion hole 102R. Thus, the second left rubber mount 96L and the second right rubber mount 96R are held by the left insertion hole 102L and the right insertion hole 102R, respectively.

The housing 94 has a sidewall 112 and a celling wall 114 but does not have a bottom wall to take a shell structure opening on the lower side. A left hollow boss 116L and a right hollow boss 116R are formed to protrude and hang down from the celling wall 114, and screw portions (second bolt attaching holes) are formed on inner peripheral walls of the left hollow boss 116L and the right hollow boss 116R. A second left bolt 120L and a second right bolt 120R (each second screw member) passing through hollow inner portions of the second left rubber mount 96L and the second right rubber mount 96R are screw-engaged with the screw portions. A left washer 121L and a right washer 121R are respectively interposed between respective head portions of the second left bolt 120L and the second right bolt 120R and lower end surfaces of small-diameter portions 104 of the second left rubber mount 96L and the second right rubber mount 96R.

Of the sidewall 112 of the housing 94, a front surface facing the license plate light receiving portion 44 is formed with a left bolt attaching hole 122L (first bolt attaching hole), a left window 123L, a right window 123R, and a right bolt attaching hole 122R (first bolt attaching hole). A left clip nut 124L is inserted from the left window 123L to align its screw receiving portion 128 with the left bolt attaching hole 122L. On the other hand, a right clip nut 124R is inserted from the right window 123R to align its screw receiving portion 128 with the right bolt attaching hole 122R. Specifically, the left clip nut 124L and the right clip nut 124R are each formed with a U-shape groove 126, and the U-shape groove 126 of the left clip nut 124L is fitted on a sidewall on the left side of the left window 123L, while the U-shape groove 126 of the right clip nut 124R is fitted on a sidewall on the right side of the right window 123R.

The left clip nut 124L and the right clip nut 124R are respectively have screw receiving portions 128 in a cylindrical shape formed in a protruding manner on rear surfaces facing the license plate light 10. The first left bolt 82L and the first right bolt 82R passing through the left collar 80L and the right collar 80R are screw-engaged with the screw receiving portions 128, respectively.

The axes of the first left bolt 82L and the first right bolt 82R extend in the front-rear direction of the vehicle body, while the axes of the second left bolt 120L and the second right bolt 120R extend in the upward-downward direction of the vehicle body.

Next, the license plate light attaching structure will be explained in relation to an assembling method for the license plate light 10. The structure is constructed by attaching such a license plate light 10 to the license plate light receiving portion 44.

First of all, the U-shape groove 126 of the left clip nut 124L is fitted over the left sidewall of the left window 123L formed on the front surface of the housing 94, and the U-shape groove 126 of the right clip nut 124R is fitted over the right sidewall of the right window 123R. Then, the positions of the clip nuts 124L, 124R are adjusted to align the screw receiving portions 128 respectively with the left bolt attaching hole 122L and the right bolt attaching hole 122R.

Then, the second left rubber mount 96L and the second right rubber mount 96R are respectively inserted into the left insertion hole 102L and the right insertion hole 102R of the light holder 92. This insertion is carried out until the annular recesses 110 is positioned in the left insertion hole 102L and the right insertion hole 102R. As a result, the inner peripheral walls of the left insertion hole 102L and the right insertion hole 102R are respectively fitted in the annular recesses 110, whereby the second left rubber mount 96L and the second right rubber mount 96R are held on the light holder 92.

Next, the harness 83 electrically connected to the light source which has been accommodated in the receiving portion 98 of the light holder 92 in advance passes through the left window 123L or the right window 123R, and then, is pierced through the harness passing hole 84 of the first rubber mount 72. Further, the harness 83 passes through the harness insertion hole 64 formed in the license plate light receiving portion 44 of the rear fender 32 and is electrically connected to a coupler provided on the vehicle body. Incidentally, the left collar 80L and the right collar 80R may have been inserted in advance into the left collar insertion hole 78L and the right collar insertion hole 78R, respectively.

Then, the second left bolt 120L is inserted into the hollow interior of the second left rubber mount 96L through the left washer 121L and is screw-engaged with the screw portion of the left hollow boss 116L of the housing 94. Likewise, the second right bolt 120R is inserted into the hollow interior of the second right rubber mount 96R through the right washer 121R, and then is screw-engaged with the screw portion of the right hollow boss 116R of the housing 94. In this manner, the light main body 90 including the light source is held by the housing 94 as the entirety of the light holder 92, whereby the license plate light 10 is configured.

Here, those interposed between the light holder 92 and the housing 94 are only the second left rubber mount 96L and the second right rubber mount 96R. These second left rubber mount 96L and second right rubber mount 96R show relatively large elasticity. Therefore, the light holder 92 and hence the light main body 90 are floatingly supported by the housing 94.

Then, the first rubber mount 72 is mounted on the mounting bottom wall 60 constituting the license plate light receiving portion 44 of the rear fender 32. Further, the front ends of the left annular protrusion 74L and the right annular protrusion 74R are respectively pushed into the left support hole 66L and the right support hole 66R. The positions of the annular grooves 76L, 76R respectively come to agreement with the left support hole 66L and the right support hole 66R, so that the inner peripheral walls of the left support hole 66L and the right support hole 66R are fitted in the annular grooves 76L, 76R, respectively. As a consequence, the first rubber mount 72 is held on the rear fender 32.

Next, the first left bolt 82L and the first right bolt 82R pass through the left collar 80L and the right collar 80R, and then, the first left bolt 82L and the first right bolt 82R are screw-engaged with the screw receiving portions 128 of the left clip nut 124L and the right clip nut 124R, respectively. Thus, the license plate light 10 is supported by the rear fender 32 through the first rubber mount 72. Here, interposed between the housing 94 (license plate light 10) and the rear fender 32 is the first rubber mount 72 only. The first rubber mount 72 is also made of rubber, and thus, like the second left rubber mount 96L and the second right rubber mount 96R, the first rubber mount 72 shows relatively large elasticity. As a consequence, the license plate light 10 is floatingly supported on the rear fender 32.

As described above, in the license plate light attaching structure according to the present embodiment, the license plate light 10 is floatingly supported on the rear fender 32, and the light holder 92 (light main body 90) is floatingly supported by the housing 94. Further, the axes of the first left bolt 82L and the first right bolt 82R extend in the front-rear direction of the vehicle body, while the axes of the second left bolt 120L and the second right bolt 120R extend in the upward-downward direction of the vehicle body.

When the motorcycle 12 during traveling goes over gaps on the road surface, the vehicle body of the motorcycle 12 vibrates. Particularly, in the present embodiment, the rear fender 32 is attached through the stay 22 to the swing arm 18 supporting the rear wheel 14 on the vehicle body frame 206. The swing arm 18 is a member which is relatively liable to vibrate, and thus, the rear fender 32 is liable to vibrate as well. However, in the present embodiment, the first rubber mount 72 interposed between the license plate light 10 and the rear fender 32 first absorbs vibrations by its elastic property. Further, since the first rubber mount 72 is suitably provided with the lightening portions 85, the first rubber mount 72 is improved in vibrations absorbing property. For this reason, vibrations are hard to be transmitted to the license plate light 10 supported floatingly by the rear fender 32. The lightening portions 85 not only contribute to lightening the first rubber mount 72 but also make it easy to form the first rubber mount 72. That is, formability is advantageously improved.

In addition, in the present embodiment, the axes of the first left bolt 82L and the first right bolt 82R are approximately perpendicular to the axes of the second left bolt 120L and the second right bolt 120R. That is, vibrations transmit in different directions. Therefore, even when vibrations are transmitted to the license plate light 10, this vibrations are not easily transmitted to the second left rubber mount 96L and the second right rubber mount 96R.

In addition, the second left rubber mount 96L and the second right rubber mount 96R are interposed between the housing 94 and the light holder 92 (light main body 90) which constitute the license plate light 10. Thus, even when vibrations are transmitted to the second left rubber mount 96L and the second right rubber mount 96R, this vibrations are absorbed by the elastic property of the second left rubber mount 96L and the second right rubber mount 96R. Owing to the vibration direction changing and the vibration absorbing described above, it becomes more difficult for vibrations to be transmitted to the light holder 92 supported floatingly by the housing 94.

Like this, according to the present embodiment, it is possible to restrain, as much as possible, the vibrations from being transmitted to the light main body 90. Accordingly, it is possible to prevent the license plate light 10 and the light main body 90 from suffering inconveniences or problems caused by vibrations.

For this reason, it is possible to attach the rear fender 32 to the swing arm 18 through the stay 22. This makes it possible to configure the motorcycle 12 being excellent in aesthetic.

The present invention is not particularly limited to the foregoing embodiment and can be variously modified without departing from the scope of the present invention. The scope of the present invention is limited only by the appended claims.

For example, coil springs may be used in substitution for the second left rubber mount 96L and the second right rubber mount 96R. In this modified case, ribs are formed to protrude from an upper surface of the light holder 92, and the coil springs are seated at opposite ends on the ribs and the bosses formed on the housing 94, respectively.

A first elastic body (72) is interposed between a rear fender (32) and a license plate light (10), and a second elastic body (96L, 96R) is interposed between a housing (94) and a light holder (92) (light main body (90)) which constitute the license plate light (10). That is, the license plate light (10) is floatingly supported on the rear fender (32), while the light holder (92) (light main body (90)) is floatingly supported on the housing (94).

## Claims

1. A license plate light attaching structure with a license plate light (10) attached to a rear fender (32) of a motorcycle (12), wherein:
the license plate light (10) has a light main body (90) including a light source, a light holder (92) provided with the light main body (90), and a housing (94) holding the light holder (92);
the housing (94) is floatingly supported on the rear fender (32) through a first elastic body (72) and fixedly positioned on the rear fender (32) by a first screw member (82L, 82R) passing through the first elastic body (72), wherein the axis of the first screw member (82L, 82R) extends in a front-rear direction of a vehicle body of the motorcycle (12), when the licence plate light (10) is attached to the vehicle body; and
the light holder (92) is floatingly supported on the housing (94) through a second elastic body (96L, 96R),
**characterized in that**
the light holder (92) is fixedly positioned on the housing (94) by a second screw member (120L, 120R) passing through the second elastic body (96L, 96R); and
an axis of the second screw member (120L, 120R) extends in an upward-downward direction of the vehicle body of the motorcycle (12), when the licence plate light (10) is attached to the vehicle body.

2. The attaching structure according to claim 1, wherein:
a through hole (102L, 102R) is formed in the light holder (92); and
the second elastic body (96L, 96R) is held by the through hole (102L, 102R).

3. The attaching structure according to claims 1 or 2, wherein:
the rear fender (32) is attachable to a swing arm (18) through a stay (22).

## Patentansprüche

1. Nummernschildbeleuchtungs-Befestigungsstruktur mit einer Nummernschildleuchte (10), die an einem hinteren Fender (32) eines Motorrads (12) angebracht ist, wobei:
die Nummernschildleuchte (10) einen eine Lichtquelle enthaltenden Leuchtenhauptkörper (90), einen mit dem Leuchtenhauptkörper (90) vorgesehenen Leuchtenhalter (92), sowie ein den Leuchtenhalter (92) haltendes Gehäuse (94) aufweist;
das Gehäuse (94) an dem hinteren Fender (32) durch einen ersten elastischen Körper (72) schwimmend gelagert ist und an dem hinteren Fender (32) durch ein den ersten elastischen Körper (72) durchsetzendes erstes Schraubelement (82L, 82R) fest positioniert ist, wobei die Achse des ersten Schraubelements (82L, 82R) sich in einer Vorne-Hinten-Richtung des Fahrzeugrumpfs des Motorrads (12) erstreckt, wenn die Nummernschildleuchte (10) an dem Fahrzeugrumpf angebracht ist; und
der Leuchtenhalter (92) an dem Gehäuse (94) durch einen zweiten elastischen Körper (96L, 96R) schwimmend gelagert ist,
**dadurch gekennzeichnet, dass**
der Leuchtenhalter (92) an dem Gehäuse (94) durch ein den zweiten elastischen Körper (96L, 96R) durchsetzendes zweites Schraubelement (120L, 120R) fest positioniert ist; und
eine Achse des zweiten Schraubelements (120L, 120R) sich in einer Oben-Unten-Richtung des Fahrzeugrumpfs des Motorrads (12) erstreckt, wenn die Nummernschildleuchte (10) an dem Fahrzeugrumpf angebracht ist.

2. Die Befestigungsstruktur nach Anspruch 1, wobei:
ein Durchgangsloch (102L, 102R) in dem Leuchtenhalter (92) ausgebildet ist; und
der zweite elastische Körper (96L, 96R) von dem Durchgangsloch (102L, 102R) gehalten wird.

3. Die Befestigungsstruktur nach Anspruch 1 oder 2, wobei:
der hintere Fender (32) an einem Schwingarm (18) durch einen Steg (22) anbringbar ist.

## Revendications

1. Structure de fixation de feu de plaque d'immatriculation avec un feu de plaque d'immatriculation (10) fixé à un garde-boue arrière (32) d'une motocyclette (12), dans laquelle :
le feu de plaque d'immatriculation (10) a un corps principal de feu (90) comportant une source de lumière, un porte-feu (92) doté du corps principal de feu (90), et un boîtier (94) portant le porte-feu (92) ;
le boîtier (94) est supporté de manière flottante sur le garde-boue arrière (32) par le biais d'un premier corps élastique (72) et positionné de manière fixe sur le garde-boue arrière (32) par un premier élément vis (82L, 82R) passant à travers le premier corps élastique (72),
dans laquelle l'axe du premier élément vis (82L, 82R) s'étend dans une direction avant-arrière d'un corps de véhicule de la motocyclette (12), lorsque le feu de plaque d'immatriculation (10) est fixé au corps de véhicule ; et
le porte-feu (92) est supporté de manière flottante sur le boîtier (94) par le biais d'un deuxième corps élastique (96L, 96R),
**caractérisée en ce que**
le porte-feu (92) est positionné de manière fixe sur le boîtier (94) par un deuxième élément vis (120L, 120R) passant à travers le deuxième corps élastique (96L, 96R) ; et
un axe du deuxième élément vis (120L, 120R) s'étend dans une direction vers le haut-vers le bas du corps de véhicule de la motocyclette (12), lorsque le feu de plaque d'immatriculation (10) est fixé au corps de véhicule.

2. Structure de fixation selon la revendication 1, dans laquelle :
un trou traversant (102L, 102R) est formé dans le porte-feu (92) ; et
le deuxième corps élastique (96L, 96R) est porté par le trou traversant (102L, 102R).

3. Structure de fixation selon les revendications 1 ou 2, dans laquelle :
le garde-boue arrière (32) peut être fixé à un bras pivotant (18) par le biais d'une base (22).
